# EUROPÄISCHE PATENTSCHRIFT

(11) **EP 1 078 574 B1**
(45) Veröffentlichungstag und Bekanntmachung des Hinweises auf die Patenterteilung: **12.05.2004**
(21) Anmeldenummer: 00810735.1
(22) Anmeldetag: 18.08.2000
(51) Int. Cl.: A22C 11/00, A22C 11/02

(54) **Verfahren zum Herstellen von Würsten aus gehacktem Fleisch und Vorrichtung zum Ausüben des Verfahrens**
Method and device for producing sausages
Procédé et dispositif pour la préparation de saucisses

(30) Priorität: 27.08.1999 CH 157699
(43) Veröffentlichungstag der Anmeldung: 28.02.2001
(73) Patentinhaber: Francini Federico, 6828 Balerna (CH)
(72) Erfinder: Francini, Federico, 6828 Balerna (CH)
(74) Vertreter: Gaggini, Carlo

(56) Entgegenhaltungen:
- EP-A- 0 180 211
- DE-B- 1 217 238
- US-A- 2 922 186
- US-A- 4 688 299

## Beschreibung

Die vorliegende Erfindung betrifft ein Verfahren zum Herstellen von Würsten aus gehacktem Fleisch gemäss dem Oberbegriff des Patentanspruchs 1 und eine Vorrichtung zum Ausüben des Verfahrens gemäss dem Oberbegriff des Patentanspruchs 4, die sich beide auf das Prinzip der Herstellung von Würsten mit zwei Umhüllungen stützen, deren innere die Wurstmasse einschliesst und deren äussere eine Verstärkung bildet

Der Zweck der vorliegenden Erfindung ist, eine Lösung für rationellere Herstellung von Würsten vorzuschlagen, die eine innere Umhüllung in Form einer Wursthaut und eine äussere Umhüllung in Form eines Netzes aus Schnurmaschen umfassen. Würste solcher Art sind generell unter dem Namen von Netzwurst und im besonderen von Salami bekannt.

Die heute gebräuchliche Herstellung von Netzwürsten bzw. von Salamiwürsten, insbesondere der hochgeschätzten kleingewerblich hergestellten Salami, umfasst einen zweistufigen Arbeitsprozess. In einem ersten Arbeitsschritt erfolgt das Füllen der Wursthaut, die normalerweise aus Naturdarm besteht, mit der Fleischmasse. Zu diesem Zweck wird die Wursthaut über ein Rohr des Extrudiergerätes gestreift und darauf in solcher Weise aufgezogen, dass sich Falten bilden. Nachdem die Wursthaut am Anfang, d.h. an dem beim Ausgang des Extruderrohrs gelegenen Ende, geschlossen ist, wird die Wursthaut gefüllt, so dass sich die Wurst bildet. Das durch den Extruder gestossene gehackte Fleisch füllt die Wursthaut weiter, die dabei vom Extruderrohr abgezogen wird.

Sobald die Wurst die gewünschte Länge erreicht hat, erfolgt das Abbinden, wobei ein Unterbruch der Wurstmasse entsteht, der das Abtrennen der aufeinander folgenden Würste voneinander erlaubt. Eine Wurst dieser Art ist jedoch für die Lagerung bzw. für den Reifungsprozess ungeeignet, für welchen die Wurst in geeigneter Umgebung aufgehängt werden muss. Damit eine solche Rohwurst zu einer ausgereiften Dauerwurst, und insbesondere zu einer Salamiwurst werden kann, ist daher erforderlich, dass die abgefüllte Wurst in ein Netz eingebracht wird, d.h. dass sie mit einem mehr oder weniger engen Maschennetz aus Schnur umhüllt wird. Dieses Netz hat die Aufgabe, die Wurst während des Trocknungs- und Reifungsprozesses allseitig zu stützen, sowohl radial als auch achsial, wobei die Wurst während einer relativ langen Zeit vertikal aufgehängt bleibt. Ferner dient das Netz zur Unterstützung und verstärkt die Wurst, damit sie gegen die Beanspruchungen widerstandsfähiger wird, denen sie in weiteren Arbeitsschritten unterworfen wird, beispielsweise beim Transport, usw.

Der Arbeitsschritt des Anbringen des Netzes erfolgt separat, insbesondere bei der Herstellung traditioneller, höher geschätzten Wurstwaren wie Salami, Coppa, usw., was einen zusätzlichen Arbeitsschritt gegenüber der normalen Herstellungsweise darstellt. Eine solche Arbeitsweise in zwei Arbeitsschritten ist wenig rationell. Zudem weist sie den Nachteil auf, dass die Herstellung von Wurstwaren beliebig grosser Länge erschwert wird, weil das Einfügen der Wurst von Hand in ein einen Netz-Überzug in einem separaten Arbeitsschritt mit zunehmender Länge der hergestellten Wurst, z.B. einer Salamiwurst, immer schwieriger wird.

Die vorliegenden Erfindung schlägt daher ein Arbeitsverfahren zum Herstellen einer Wurst aus gehacktem Fleisch vor, insbesondere einer Salamiwurst, die in einem einzigen Arbeitsschritt mit zwei Überzügen versehen ist, wodurch ein separater Arbeitsschritt eingespart werden kann. Darüber hinaus soll das Verfahren die Herstellung von Würsten mit doppelter Umhüllung erlauben, insbesondere von in ein Netz eingebrachten Würsten von beliebiger und praktisch unbegrenzter Länge.

Gemäss dem Stand der Technik sind bereits verschiedene Arten von Verfahren zur Herstellung von Würsten mit doppeltem Überzug bekannt, von denen jedoch keines den der vorliegenden Erfindung zu Grunde liegenden Bedingungen entspricht.

So ist aus der US-A-4'470'171 ein Produkt und ein Verfahren zu seiner Herstellung bekannt, gemäss welchem eine Wurst mit doppelter Umhüllung hergestellt werden kann. Gemäss dieser Erfindungsidee werden zwei oder mehr Umhüllungen eine nach der anderen auf ein einziges Rohr aufgezogen, auf dem sie strumpfartig zusammengefaltete Beläge bilden. Diese Arbeitsmethode bringt den Nachteil mit sich, dass das Extrusionsrohr länger gewählt werden muss, weil die Überzüge einer hinter dem anderen darauf aufgezogen sind. Überdies ist es gar nicht einfach, den äusseren Überzug über den inneren auf das Rohr aufzuziehen, wenn der äussere Überzug die Form eines Netzes aus Schnurmaschen aufweist. Die Lösung gemäss US-A-4'470'171 ist offensichtlich für Wurstwaren mit doppelter Umhüllung vorgesehen, bei denen beide Umhüllungen glatte Oberflächen haben und wobei "Kartuschen" mit künstlichem Wursthautmaterial verwendet werden.

Gemäss einem anderen bekannten Vorschlag zur Herstellung von Würsten bzw. von Fleischwaren, die in einem kompakten feinmaschigen Netz (EP-A-0175173) eingeschlossen sind, wie insbesondere gekochter Schinken, ist zum gleichzeitigen Einbringen des Schinkens in ein essbares Kollagen-Blatt und in ein elastisches Stütznetz vorgesehen, dass eine Vorrichtung mit einem Führungsrohr verwendet wird, das als Einführblech gestaltet ist und auch als "Schulter" bezeichnet wird, mittels welchem ein Kollagenblatt zu einem Rohr oder einem inneren Überzug gebogen wird. Über dieses Kollagenblatt wird sodann ein Maschen-Strumpfrohr oder ein Stütznetz gezogen, das strumpfförmig auf einem Rohr aufgezogen ist und durch den Schinken selbst abgezogen wird, während er mit dem Kollagenblatt bedeckt wird. Dieses Dokument zeigt zwar die Herstellung von mit einem Netz überzogenen Fleischwaren in einem Arbeitsgang, wobei jedoch der innere Überzug hier durch ein Kollagenblatt gebildet wird, d.h. durch ein vollständig anderes Element, das sich von einer vollständig geschlossenen bzw. röhrenförmigen Umhüllung unterscheidet, welche die innere Umhüllung der Wurst bildet, die gemäss dem vorliegenden erfindungsgemässen Verfahren erhalten wird.

Auch die US-A-4'688'299 zeigt ein Verfahren zur Herstellung einer Wurst mit doppelter Umhüllung: Auch hier wird die innere Umhüllung aus einem Blatt gebildet, das über eine "Schulter" zu einer Rohrform gebogen wird, wobei ein einziges Extrusionsrohr vorhanden ist. Nicht aufschlussreicher ist sodann die

Lehre der PCT WO 99/22600, gemäss welcher die Möglichkeit gezeigt ist, nach der extrudierte Würste mit mehreren Schichten von Umhüllungen unter Anwendung von Emulsionen hergestellt werden können, die extrudiert werden und eine umhüllende Haut aus dem künstlichen Material bilden. Insbesondere wird gemäss diesem Vorschlag das Kollagen als dünne Schicht extrudiert und auf die äussere Oberfläche der Wurst aufgebracht. Hier bewegt man sich also im Bereich der industriellen Wurstwarenherstellung für den Grossverbrauch, der nichts mit der Herstellung von in Netzen eingebrachten Wurstwaren zu tun hat, die das Anwendungsfeld der vorliegenden Erfindung darstellt, ausser im Vorhandensein einer mehrschichtigen Umhüllung.

Die vorliegende Erfindung löst die obengenannte Aufgabenstellung dank den im kennzeichnenden Teil des Anspruchs 1 aufgeführten Eigenschaften, die das Verfahren betreffen, und des Anspruchs 4, welche die Vorrichtung zur Ausübung des Verfahrens betreffen.

Eine besonders kennzeichnende Eigenschaft der vorliegenden Erfindung im Sinn des Arbeitsverfahrens liegt darin, dass vorgesehen ist, dass die beiden Umhüllungen in solcher Weise aufgezogen werden, dass sie auf zwei koaxial ineinander angeordneten Rohren eine über der andern liegende Falten bilden, wobei während des Extrudierens der gehackten Fleischmasse die innere Umhüllung die äussere Umhüllung mit sich zieht, in solcher Weise, dass die beiden in Röhrenform vorliegenden Umhüllungen, gleichzeitig aufgebracht werden und die Wurst, insbesondere die fertige Salamiwurst, umschliessen.

Hinsichtlich der Vorrichtung zur Ausübung des Verfahrens ist die wesentliche Eigenschaft, dass sie zwei koaxial ineinander angeordnete Rohre aufweist, auf denen je eine Wurstumhüllung aufgezogen wird, die dabei in solcher Weise in Falten gelegt wird, dass auf jedem der Rohre eine Länge von innerem bzw. äusserem Umhüllungsmaterial für die Salamiwurst untergebracht wird, die einem Vielfachen der Länge des Rohrs entspricht.

Die vorliegenden Erfindung wird im Folgenden unter Bezugnahme auf ein illustriertes Ausführungsbeispiel in ihren Einzelheiten näher beschrieben. Die Abbildungen zeigen in der:
- Fig. 1: Eine schematische Ansicht, teilweise im Schnitt, einer erfindungsgemässen Vorrichtung,
- Fig. 2: Die gleiche Vorrichtung wie in der Fig. 1, jedoch in perspektivischer Darstellung,
- Fig. 3: Eine Variante der Vorrichtung gemäss der Fig. 1, in der Draufsicht und mit einem zusätzlichen Konstruktionsdetail, das die Arbeit der Bedienungsperson erleichtert.

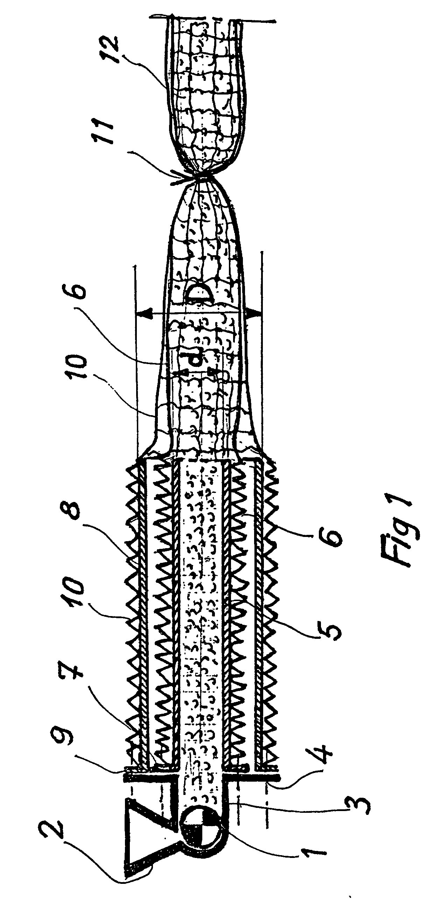

In der Fig. 1 ist die erfindungsgemässe Vorrichtung in einer Seitenansicht und zur Erleichterung des Verständnisses teilweise im Schnitt dargestellt.

Mit 1 ist eine Extrudiervorrichtung rein schematisch angedeutet. Normalerweise sind solche Extrudiervorrichtungen mit einer horizontalen Schnecke versehen, welche das gehackte Material aus einem Zuführtrichter 2 aufnimmt und es in ein Rohr 3 stösst. Dieses Rohr 3 kann eine gewisse Länge aufweisen, damit eine über den ganzen Querschnitt des Rohrs gleichmässige Extrusion erreicht wird. In der Figur ist dieses Rohr kürzer als normal dargestellt, da die ganze Extrudiervorrichtung die vorliegende Erfindung nicht im geringsten beeinflusst. Einzig wichtig ist, dass das Rohr 3 in einer geeigneten Befestigungsvorrichtung endet, mittels welcher die beiden koaxial angeordneten Rohre befestigt werden, wie dies im Folgenden erklärt wird. Im hier dargestellten Beispiel weist das Rohr 3 einen Flansch 4 auf, der mit einem Kranz von Bohrungen versehen ist, die längs zwei Umfangslinien von verschiedenem Durchmesser verteilt angeordnet sind. Die dargestellte Lösung stellt jedoch lediglich eine von vielen möglichen Varianten der Befestigung von zwei koaxial angeordneten Rohren auf dem Rohr 3 dar. Eine andere Variante könnte beispielsweise sein, dass Briden mit Schnellverschluss (nicht gezeigt) verwendet würden.

Am Rohr 3 ist ein langes inneres Rohr 5 koaxial mit diesem befestigt, welches das eigentliche Extrusionsrohr bildet, und das an einem Ende mit dem Rohr 3 verbunden ist und am anderen Ende offen ist. Auf dem Extrusionsrohr 5 wird eine innere Umhüllung 6 für die Wurst in achsialer Richtung aufgeschoben. In der Abbildung ist diese Umhüllung im Schnitt schematisch angedeutet, die auf dem Extrusionsrohr einen in regelmässige Handhamonika-Falten gelegten Körper bildet. In Wirklichkeit sind diese Falten weniger regelmässig ausgebildet, und normalerweise neigen sie dazu, sich auf dem am nächsten beim Flansch 4 gelegenen Rohrteil mehr aufeinanderzuschichten, wo das Extrusionsrohr 5 in der beschriebenen Ausführungsform selbst einen Befestigungsflansch 7 aufweist, der am Flansch 4 mittels Schrauben (nicht gezeigt) befestigt wird, welche durch die Bohrungen des inneren Bohrungskranzes im Flansch 4 durchtreten. Auch spielt die Art der inneren Umhüllung 6 im Rahmen der vorliegenden Erfindung keine wesentliche Rolle. Es kann sich dabei um irgendeine Art natürlicher oder künstlicher Umhüllung handeln. Wichtig ist in diesem Zusammenhang nur, dass sie sich beim Aufschieben auf das Extrusionsrohr 5 in Falten legt, in solcher Weise, dass eine innere Umhüllung 6 von einer Länge aufgenommen werden kann, die einem Mehrfachen der Länge des Rohrs entspricht. Für die industrielle Fabrikation von Wurstwaren der Art von "Würstchen" oder "Wienerli" beispielsweise werden meistens schlauchförmige künstliche Umhüllungen aus Kollagen verwendet, die in enge Falten gelegt sind und eine Art Kartusche (Patrone) bilden, die Falte um Falte von einer Stirnseite her achsial auf das Rohr aufgeschoben werden kann. Auch kann eine solche "Patrone künstlicher Wursthaut" zur Verwendung auf der erfindungsgemässen Vorrichtung bzw. zum Ausüben des erfindungsgemässen Verfahrens in Betracht kommen. Auf jeden Fall sei klar festgehalten, dass bei der Herstellung von Netzwurstwaren, welche den hauptsächlichen - aber nicht einzigen - Zweck der vorliegenden Erfindung darstellt, die innere Umhüllung 6 vorzugsweise aus natürlichem Wurstdarm besteht, der in Falten gelegt auf das Extrusionsrohr 5 aufgeschoben wird: Ein Arbeitsschritt den jeder Fachmann kennt, und der deshalb hier nicht weiter in seinen Einzelheiten werden soll. Selbstverständlich ist die Länge einer solchen natürlichen Wursthaut begrenzt, im Vergleich zu jener, die in einer Patrone von künstlicher Wursthaut untergebracht werden kann. Jeder Fachmann weiss jedoch auch, dass auch die natürlichen Wurstdärme in der praktischen Verwendung einer mit dem andern in solcher Weise verbunden werden können, dass eine Wursthaut von theoretisch unbegrenzter Länge entsteht, was durch Übereinanderlegen der entsprechenden Enden erreicht wird. Die Verwendung einer natürlichen Wursthaut, die bei der Herstellung kleingewerblicher Würste zwingend notwendig ist, stellt daher keine Begrenzung der Länge bei der Herstellung von Würsten sehr grosser Länge dar.

Koaxial wird ein äusseres Rohr 8 über das innere Extrusionsrohr 5 eingeschoben, welches das innere Rohr 5 umgibt und in solcher Weise umschliesst, dass zwischen den beiden Rohren 5 und 8 ein radiales Spiel, d.h. ein ringförmiger Zwischenraum gegenüber der inneren Umhüllung 6 frei bleibt, die in Falten gelegt auf dem inneren Rohr 5 aufgeschoben ist, wie dies im Vorhergehenden erklärt worden ist. Das äussere Rohr 8, das ebenfalls am Flansch 4 befestigt ist - im dargestellten Ausführungsbeispiel mittels eines Flansches 9 am äusseren Rohr, der am äusseren Kranz von Bohrungen im Flansch 4 mittels (nicht gezeigten) Schrauben befestigt wird - erstreckt sich im Wesentlichen über die ganze Länge des inneren Extrusionsrohrs 5, welches es somit vollständig umschliesst. Dies bedeutet, anders ausgedrückt, dass sich die offenen äusseren Öffnungen der beiden Rohre 5 und 8 in ungefähr derselben Ebene befinden.

Auf dem äusseren Rohr 8 wird erfindungsgemäss eine äussere Umhüllung 10 für die Wurst aufgeschoben und in solcher Weise zusammengeschoben, dass sie Falten bildet, damit - auch - auf dem äusseren Rohr 8 eine äussere Umhüllung 10 von einer Länge aufgenommen werden kann, die einem Mehrfachen der Länge des Rohrs 8 entspricht.

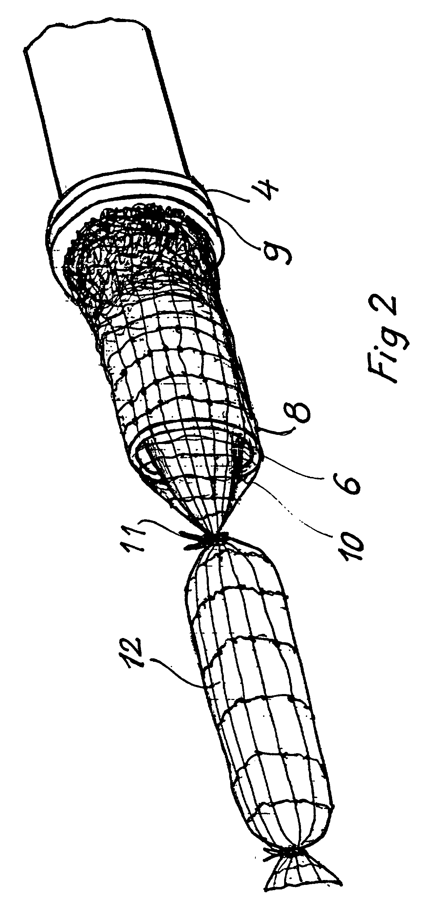

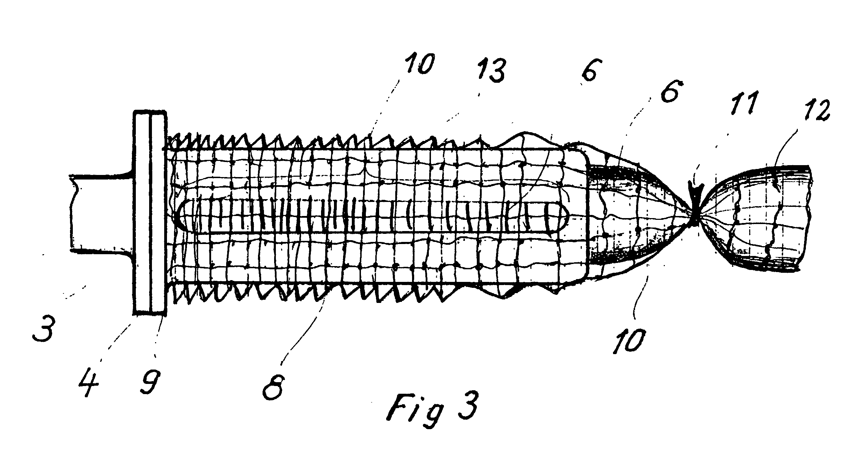

Auch hinsichtlich der äusseren Umhüllung der Wurst verlangt die vorliegende Erfindung keine besonderen Bedingungen, ausser dass es sich um ein schlauchförmiges natürliches oder künstliches Umhüllmaterialhandelt, das in Falten gelegt in solcher Weise komprimiert werden kann bzw. komprimiert ist, dass es eine Art Patrone auf dem äusseren Rohr bildet. Auch in diesem Fall ist, wie im vorher beschriebenen Fall der inneren Umhüllung, die äussere Umhüllung 10 auf dem äusseren Rohr 8 schematisch mit regelmässiger Faltenbildung in der Art von "Handharmonikafalten" dargestellt. Dabei ist klar, dass es sich um eine idealisierte Darstellung der auf das äussere Rohr 8 aufgeschobenen äusseren Umhüllung 10 handelt. Gemäss einer bevorzugten Variante der vorliegenden Erfindung, nämlich der Herstellung von Netzwürsten - und insbesondere von Salamiwürsten - besteht die äussere Umhüllung 10 aus einem schlauchförmigen Körper in Form eines Netzes (in den Figuren 2 und 3 besser ersichtlich, in welchen insbesondere die Anwendung des erfindungsgemässen Verfahrens zur Herstellung von Salamiwürsten dargestellt werden soll). In solchen Fällen ist klar ersichtlich, dass sich die äussere Umhüllung 10 auf das äussere Rohr 8 aufschieben lässt, jedoch darauf keine "Handharmonika"-Falten bildet, wie sie die idealisierte Darstellung in der Fig. 1 zeigt, sondern unregelmässige Falten, wie sie in der Fig. 2 dargestellt sind, welche die Vorrichtung während der Herstellung von mit einem Netz umhüllten Würsten in perspektivischer Darstellung zeigt. Obschon die Herstellung von Netz-Würsten eine bevorzugte Anwendungsform der vorliegenden Erfindung darstellt, ist zu unterstreichen, dass die vorliegende Erfindung nicht auf eine solche Anwendung eingeschränkt ist, und dass sie somit auch zum gemeinsamen Anbringen einer inneren und einer äusseren Umhüllung 6 bzw. 10 bei der Herstellung von Würsten mit doppelter Umhüllung von glatter Art auch im Rahmen der vorliegenden Erfindung liegt.

Wichtig im Sinn der erfindungsgemässen Eigenschaften ist lediglich, dass während des Extrudierens des gehackten Fleisches dieses die innere Umhüllung 6 mit sich zieht und diese füllt, wie dies in den Fig. 1 bis 3 dargestellt ist, welche zuvor an einem Abbindepunkt 11 der Wurst abgeschlossen wurde, wobei die Umhüllung 6 vom inneren Rohr 5 abläuft und ebenso die äussere Umhüllung 10, die am Abbindepunkt 11 der Wurst festgemacht worden war, in solcher Weise ebenfalls zusammen mit der inneren Umhüllung 6 abgezogen wird. In solcher Weise gelingt es somit, eine mit zwei Umhüllungen 6 und 10 versehene Wurst 12 in einem Arbeitsschritt herzustellen, ausgehend von zwei schlauchförmigen Umhüllungen 6 und 10, die je in Falten gelegt auf die Rohre 5 und 8 koaxial aufgeschoben sind und sich beim Verfüllen der Wurst übereinanderlegen.

An dieser Stelle ist nochmals zu präzisieren, dass der Abbindepunkt 11 für die vorliegende Erfindung keine besondere Rolle spielt: Es kann sich dabei um eine Abbindung mittels Bindfaden, oder mittels einer kleinen Metallklammer handeln. Bei der Herstellung bestimmter Wurstwaren, wie Salami, ist wichtig, dass die Abbindung in solcher Weise erfolgt, dass die einzelnen Würste leicht abgetrennt werden können. Zu diesem Zweck erfolgt das Abbinden oft in zwei verschiedenen Ebenen, was ermöglicht, dass die Wurst von der nachfolgenden zwischen den beiden angebrachten Abbindungen abgeschnitten werden kann.

Gemäss einer besonders vorteilhaften Ausgestaltung des erfindungsgemässen Verfahrens, bei der die innere Umhüllung 6 eine natürliche Wursthaut und die äussere Umhüllung 10 ein schlauchförmiger Körper in Form eines Schnurnetzes gebildet wird, ist vorgesehen, dass die herzustellende Wurst eine Salamiwurst ist, die aus gehacktem Fleisch besteht, dessen Granulometrie (Korngrösse) grösser als 2 mm ist. In diesem Fall erhält man eine Salamiwurst vom sogenannten Nostrano-Typ bzw. vom kleinhandwerklichen Typ, der besonders geschätzt ist: Bei dieser Anwendung gewinnt die Möglichkeit, die Wurst im gleichen und einzigen Arbeitsgang ins Netz einzubringen, ihren vollen Rationalisierungswert für die Herstellung.

Gemäss einer bevorzugten Variante der erfindungsgemässen Vorrichtung, die überigens in der vorhergegangenen Beschreibung bereits erwähnt wurde, ist das äussere Rohr 8 in leicht lösbarer Art an der Extrudiervorrichtung 1 befestigt, so dass es schnell abgenommen werden kann, um das Aufschieben der inneren Umhüllung 6 auf das innere Rohr 5 zu erleichtern. Eine Befestigung dieser Art, die in den Figuren nicht dargestellt ist, aber vom Fachmann auf dem Gebiet leicht angebracht werden kann, sieht beispielsweise vor, dass ein Schnellverschluss mittels einer radialen Bride bzw. Rohrschelle verwendet wird, oder dass in sehr vorteilhafter Weise ein sogenannter Bajonettverschluss verwendet wird.

Gemäss einer anderen bevorzugten Ausführungsform der vorliegenden Erfindung, die in der Fig. 3 dargestellt ist und die erfindungsgemässe Vorrichtung von oben gesehen zeigt, wobei alle Elemente, die solchen entsprechen, die in den Figuren 1 und 2 gezeigt sind, mit den gleichen Bezugszeichen versehen sind, ist vorgesehen, dass das äussere Rohr 8 oben einen durchsichtigen Bereich 13 aufweist, der sich über einen Teil oder über die ganze Länge des Rohrs erstreckt, insbesondere eine längsgerichtete Ausnehmung 13. Dank dieser Anordnung kann die Bedienungsperson durch den durchsichtigen Bereich hindurch das Abziehen der inneren Umhüllung 6 während der Extrusion des gehackten Fleisches beobachten, d.h. währenddem die Wurst gefüllt wird. Dies stellt einen beträchtlichen Vorteil dar, da die Bedienungsperson in dieser Weise nicht nur das richtige Abziehen der inneren Umhüllung 6 vom Extrusionsrohr 5 (das in der Fig. 3 nicht sichtbar ist, da es vom äusseren Rohr 8 verdeckt ist) überwachen kann, sondern auch rechtzeitig das Herannahen des Endes der inneren Umhüllung 6 feststellen kann und für Ersatz sorgen kann, bevor diese am Ausgang des Extrusionsrohrs 5 zu Ende geht. Dies ist besonders wichtig, wenn als innere Umhüllung 6 natürliche Wurstdärme verwendet werden, deren Länge begrenzt ist, und die deshalb häufiges Ersetzen erfordern.

Gemäss einer weiteren bevorzugten Ausführungsform der vorliegenden Erfindung ist das äussere Rohr vollständig aus durchsichtigem Material hergestellt, insbesondere aus Glas, und erlaubt daher eine noch vollständigere Überwachung des Abfüllens der Wurst als in der vorhergehend beschriebenen Ausführungsform.

Hinsichtlich der Abmessungen der erfindungsgemässen Vorrichtung hat die praktische Erfahrung erwiesen, dass das äussere Rohr 8 und das innere Rohr 5 eine Länge aufweisen müssen, die zwischen 10 und 60 cm liegt, vorzugsweise zwischen 20 und 30 cm, je nach der Art der herzustellenden Wurstwaren und insbesondere je nach der Art der Umhüllungen - natürliche oder künstliche - die zur Anwendung kommen.

Der Durchmesser der verwendeten Rohre 5 und 8 hängt ebenfalls stark von der Art der herzustellenden Würste ab. Die praktische Erfahrung hat jedoch erwiesen, dass beste Arbeitsbedingungen bei der Herstellung der üblichsten Würste erreicht werden, wenn ein Aussendurchmesser d des inneren Rohrs 5 zwischen 1 und 4 cm sowie ein Aussendurchmesser D des äusseren Rohrs 8 zwischen 2 und 8 cm gewählt wird. Dabei ist eine unabdingbare Voraussetzung für gutes Funktionieren der erfindungsgemässen Vorrichtung, dass zwischen den beiden Rohren 5 und 8 ein ringförmiger Spalt genügender Breite frei bleibt, der in jedem Fall grösser als 0.5 cm sein muss.

Andere, hier nicht beschriebene Varianten sind im Rahmen der vorliegenden Erfindung ebenfalls denkbar: So beispielsweise die Verwendung von Rohren mit einer von der kreisrunden Form abweichenden Querschnittsform, mittels welchen besondere Formen von Würsten erreicht werden können, oder von inneren und äusseren Rohren, die beide aus Glas hergestellt sind sowie von Rohren verschiedener Länge. Wesentlich ist dabei einzig, dass die beiden Rohre eines im anderen angeordnet sind, und dass auf den Rohren die beiden Umhüllungen, welche für die Bildung der "Haut" der Wurst vorgesehen sind, aufgezogen und zusammengeschoben werden.

Das Verfahren und die Vorrichtung gemäss der vorliegenden Erfindung sind dadurch gekennzeichnet, dass sie eine beträchtliche Arbeitsrationalisierung bei der Herstellung von in Netzen eingehüllten Würsten und insbesondere beim Herstellen von Salamiwürsten erlauben, die traditionsgemäss in eine weitmaschige Netzhülle aus Schnüren eingefügt sind.

### Liste der in den Figuren verwendeten Bezugsziffern

- 1: Extrudiervorrichtung
- 2: Zuführtrichter
- 3: Rohr
- 4: Flansch
- 5: Extrusionsrohr
- 6: Innere Umhüllung
- 7: Befestigungsflansch
- 8: Äusseres Rohr
- 9: Flansch
- 10: Äussere Umhüllung
- 11: Abschnür- oder Abbindepunkt
- 12: Wurst
- 13: Längsabschnitt

## Patentansprüche

1. Verfahren zum Herstellen von Würsten aus gehacktem Fleisch, die mit einer inneren Umhüllung (6), welche die Wurstmasse umschliesst, sowie mit einer verstärkenden äusseren Umhüllung (10) versehen ist,
**dadurch gekennzeichnet, dass**
die innere Umhüllung (6) auf ein inneres Extrusionsrohr (5) für die gehackte Fleischmasse in solcher Weise aufgeschoben und achsial zusammengeschoben wird, dass sie sich in Falten legt,
die äussere Umhüllung (10) auf ein äusseres Rohr (8) aufgeschoben wird, das koaxial mit dem inneren Rohr (5) angeordnet ist und das innere Rohr (5) in solcher Weise umgibt, dass für die innere Umhüllung (6) Platz bleibt, die in Falten gelegt auf dem inneren Rohr (5) aufgeschoben ist, wobei auch die äussere Umhüllung in solcher Weise auf das äussere Rohr aufgeschoben wird, dass sie Falten bildet,
während des Extrudierens der gehackten Fleischmasse diese die innere Umhüllung (6) mit sich zieht und sie dabei füllt, wobei die Umhüllung vorne an einem Abbindepunkt (11) der Wurst geschlossen ist und vom inneren Rohr (5) abgezogen wird, und dass
auch die äussere Umhüllung (10) am Abbindepunkt (11) der Wurst befestigt ist und daher während des Extrudierens der gehackten Fleischmasse zusammen mit der inneren Umhüllung (6) in solcher Weise abgezogen wird, dass eine mit einer doppelten Umhüllung versehene Wurst (12) in einem einzigen Arbeitsschritt gebildet wird.

2. Verfahren zum Herstellen von Würsten aus gehacktem Fleisch gemäss dem Anspruch 1,
**dadurch gekennzeichnet, dass**
die innere Umhüllung (6) ein natürlicher Wurstdarm ist, und die äussere Umhüllung (10) ein rohrförmiger Körper in Form eines zusammengeschobenen weitmaschigen Netzes aus Schnur.

3. Verfahren zum Herstellen von Würsten aus gehacktem Fleisch gemäss dem Anspruch 1 oder 2,
**dadurch gekennzeichnet, dass**
die Wurst (12) eine Salamiwurst aus gehacktem Fleisch mit einer Granulometrie (mittlere Korngrösse) der gehackten Fleischmasse von mehr als 2 mm ist.

4. Vorrichtung zum Ausüben des Verfahrens gemäss einem der vorhergehenden Ansprüche 1 bis 3,
**gekennzeichnet durch** die folgenden Elemente:
- ein inneres Rohr (5) für das Extrudieren der gehackten Fleischmasse, das an einem seiner Enden mit der Extrudiervorrichtung (1) verbunden ist und an seinem anderen Ende offen ist, auf welchem die innere Umhüllung (6) der Wurst in solcher Weise aufgeschoben ist, dass sie in Falten gelegt wird, so dass auf dem inneren Rohr (5) eine innere Umhüllung (6) aufgenommen wird, deren Länge einem Vielfachen der Länge des Rohrs (5) entspricht,
- ein koaxial mit dem inneren Rohr (5) angeordnetes äusseres Rohr (8), welches das innere Rohr (5) in solcher Weise umgibt, dass zwischen den beiden Rohren (5 und 8) ein genügend grosses Spiel verbleibt, so dass Platz verbleibt für die innere Umhüllung (6), die in Falten gelegt auf dem inneren Rohr (5) aufgeschoben ist, wobei das äussere Rohr (8) das innere Rohr (5) im wesentlichen über seine ganze Länge umschliesst, und wobei ferner auf dem äusseren Rohr (8) die äussere Umhüllung (10) der Wurst achsial in solcher Weise aufgeschoben wird, dass sie in Falten gelegt ist, so dass auf dem äusseren Rohr (8) eine äussere Umhüllung (10) aufgenommen wird, deren Länge einem Vielfachen der Länge des äußeren Rohrs (8) entspricht.

5. Vorrichtung gemäss dem Anspruch 4,
**dadurch gekennzeichnet, dass** auch das äussere Rohr (8) an einem seiner Enden an der Extrudiervorrichtung (1) befestigt ist, während das entgegengesetzte Ende offen bleibt.

6. Vorrichtung gemäss dem Anspruch 5,
**dadurch gekennzeichnet, dass**
das äussere Rohr (8) an der Extrudiervorrichtung (1) in leicht lösbarer Weise befestigt ist, damit das Aufschieben der inneren Umhüllung (6) auf das innere Rohr (5) erleichtert wird.

7. Vorrichtung gemäss dem Anspruch 4,
**dadurch gekennzeichnet, dass**
das äussere Rohr (8) auf seiner Oberseite einen längsgerichteten durchsichtigen Bereich (13) aufweist, insbesondere eine längsgerichtete Ausnehmung, der sich in solcher Weise über die ganze Länge des Rohrs oder über einen Teil davon erstreckt, dass die Bedienungsperson den Ablauf des Abziehens der inneren Umhüllung (6) während des Vorgangs des Extrudierens der gehackten Fleischmasse bzw. das Füllen der Wurst (12) beobachten kann.

8. Vorrichtung gemäss dem Anspruch 4,
**dadurch gekennzeichnet, dass**
das äussere Rohr (8) aus durchsichtigem Material, insbesondere aus Glas, gefertigt ist, so dass die Bedienungsperson den Vorgang des Abziehens der inneren Umhüllung (6) während des Extrudierens der gehackten Fleischmasse bzw. während des Füllens der Wurst beobachten kann.

9. Vorrichtung gemäss dem Anspruch 4,
**dadurch gekennzeichnet, dass**
das äussere Rohr (8) und das innere Rohr (5) eine Länge aufweisen, die zwischen 10 und 50 cm liegt, und vorzugsweise zwischen 20 und 30 cm liegt.

10. Vorrichtung gemäss dem Anspruch 4,
**dadurch gekennzeichnet, dass**
der Aussendurchmesser (d) des inneren Rohrs (5) zwischen 1 und 4 cm liegt, während der Aussendurchmesser (D) des äusseren Rohrs (8) zwischen 2 und 8 cm liegt, wobei zwischen den beiden Rohren (5 bzw. 8) ein Ringspalt von mehr als 0.5 cm Breite frei bleibt.

## Claims

1. Method for the manufacture of sausages from chopped meat which is provided with an inner sleeve (6) which surrounds the sausage material and also with a reinforced outer sleeve (10),
**characterised in that**
the inner sleeve (6) is pushed onto an inner extrusion tube (5) for the chopped meat material and pushed together axially in such a way that it lies in folds,
**in that** the outer sleeve (10) is pushed onto an outer tube (8) which is arranged coaxial to the inner tube (5) and surrounds the inner tube (5) in such a way that space remains for the inner sleeve (6) which is pushed onto the inner tube (5) and lies in folds, with the outer sleeve being pushed onto the outer tube in such a way that it forms folds,
**in that**, during the extrusion of the chopped meat material, the latter draws the inner sleeve (6) with it and thereby fills it, with the sleeve being closed at the front at a binding-off point (11) of the sausage and being drawn off from the inner tube (5), and **in that** the outer sleeve (10) is also secured at the binding-off point (11) of the sausage and thus drawn off during the extrusion of the chopped meat material together with the inner sleeve (6) in such a way that a sausage (12) provided with a double sleeve is formed in a single working step.

2. Method for the manufacture of sausages from chopped meat in accordance with claim 1,
**characterised in that**
the inner sleeve (6) is a natural sausage gut and the outer sleeve (10) is a tubular body in the form of a pushed together wide meshed net of cord.

3. Method for the manufacture of sausages from chopped meat in accordance with claim 1 or claim 2,
**characterised in that**
the sausage (12) is a salami sausage of chopped meat with a granulometry (average grain size) of the chopped meat material of more than 2 mm.

4. Apparatus for carrying out the method in accordance with one of the preceding claims 1 to 3,
**characterised by** the following elements:
- an inner tube (5) for the extrusion of the chopped meat material which is connected at one of its ends to the extruder apparatus (1) and is open at its other end onto which the inner sleeve (6) of the sausage is pushed in such manner that it lies in folds, so that an inner sleeve (6) is received on the inner tube (5), with the length of the inner sleeve (6) corresponding to a multiple of the length of the tube (5),
- an outer tube (8) arranged coaxially to the inner tube (5) and surrounding the inner tube (5) in such a way that an adequately large clearance remains between the two tubes (5 and 8), so that space remains for the inner sleeve (6) which is pushed onto the inner tube (5) and lies in folds, with the outer tube (8) surrounding the inner tube (5) essentially over its full length and with the outer sleeve (10) of the sausage furthermore being axially pushed onto the outer tube (8) in such a manner that it lies in folds, so that an outer sleeve (10) is received on the outer tube (8) with a length which corresponds to a multiple of the length of the outer tube (8).

5. Apparatus in accordance with claim 4,
**characterised in that**
the outer tube (5) is also connected at one of its ends to the extrusion apparatus (1) while the opposite end remains open.

6. Apparatus in accordance with claim 5,
**characterised in that**
the outer tube (8) is secured to the extrusion apparatus (1) in an easily releasable manner, so that the pushing of the inner sleeve (6) onto the inner tube (5) is made easier.

7. Apparatus in accordance with claim 4,
**characterised in that**
the outer tube (8) has at its surface a longitudinally directed transparent region (13), in particular a longitudinally directed cut-out which extends over the entire length of the tube or over a part of it in such a way that the operator can observe the progress of the drawing off of the inner sleeve (6) during the process of the extrusion of the chopped meat material, i.e. the filling of the sausage (12).

8. Apparatus in accordance with claim 4,
**characterised in that**
the outer tube (8) is made of transparent material, in particular of glass, so that the operator can observe the process of the drawing off of the inner sleeve (6) during the extrusion of the chopped meat material, i.e. during the filling of the sausage.

9. Apparatus in accordance with claim 4,
**characterised in that**
the outer tube (8) and the inner tube (5) have a length which lies between 10 and 15 cm and preferably lies between 20 and 30 cm.

10. Apparatus in accordance with claim 4,
**characterised in that**
the outer diameter (d) of the inner tube (5) lies between 1 and 4 cm while the outer diameter (D) of the outer tube (8) lies between 2 and 8 cm, with a ring gap of more than 0.5 cm width remaining free between the two tubes (5 and 8) respectively.

## Revendications

1. Procédé de production de saucisses en viande hachée qui est munie d'une enveloppe (6) intérieure qui entoure la chair à saucisse, ainsi que d'une enveloppe (10) extérieure de renfort,
**caractérisé en ce que**
l'enveloppe (6) intérieure est enfilée sur un tube (5) intérieur d'extrusion pour la chair à saucisse hachée et est rassemblée axialement de façon à ce qu'elle se mette en plis,
l'enveloppe (10) extérieure est enfilée sur un tube (8) extérieur qui est coaxial au tube (5) intérieur et qui entoure le tube (5) intérieur de façon à laisser de la place pour l'enveloppe (6) intérieure qui, en étant mise en plis, est enfilée sur le tube (5) intérieur, l'enveloppe extérieure étant aussi enfilée sur le tube extérieur de manière à ce qu'elle forme des plis,
pendant l'extrusion de la chair à saucisse hachée, celle-ci tire avec elle l'enveloppe (6) intérieure et ainsi la remplit, l'enveloppe étant fermée à l'avant en un point (11) de ligature de la saucisse et étant retirée du tube (5) intérieur, et **en ce que**
l'enveloppe (10) extérieure, aussi, est fixée au point (11) de ligature de la saucisse et, donc, retirée pendant l'extrusion de la chair à saucisse hachée ensemble avec l'enveloppe (6) intérieure de façon à ce qu'une saucisse (12) munie d'une enveloppe double soit formée en un stade unique de travail.

2. Procédé de production de saucisses à partir de viande hachée suivant la revendication 1,
**caractérisé en ce que**
l'enveloppe (6) intérieure est un boyau naturel de saucisse et l'enveloppe (10) extérieure est une pièce tubulaire sous la forme d'un réseau resserré à grandes mailles en fil.

3. Procédé de production de saucisses à partir de viande hachée suivant la revendication 1 ou 2,
**caractérisé en ce que**
la saucisse (12) est une saucisse de salami en viande hachée d'une granulométrie (dimension moyenne de grain) de la chair à saucisse hachée de plus de 2 mm.

4. Dispositif de mise en oeuvre du procédé suivant l'une des revendications 1 à 3,
**caractérisé par** les éléments suivants :
- un tube (5) intérieur pour l'extrusion de la chair à saucisse hachée qui est relié à l'une de ses extrémités au dispositif (1) d'extrusion et qui est ouvert à son autre extrémité sur laquelle l'enveloppe (6) intérieure de la saucisse est enfilée de façon à ce qu'elle se mette en plis de sorte que sur le tube (5) intérieur est reçue une enveloppe (6) intérieure dont la longueur représente un multiple de la longueur du tube (5) ;
- un tube (8) extérieur coaxial au tube (5) intérieur, qui entoure le tube (5) intérieur de façon à ce qu'il reste entre les deux tubes (5 et 8) un jeu suffisamment grand de sorte qu'il reste de la place pour l'enveloppe (6) intérieure qui, en étant mise en plis, est enfilée sur le tube (5) intérieur, le tube (8) extérieur entourant le tube (5) intérieur sensiblement sur toute sa longueur et, en outre, l'enveloppe (10) extérieure de la saucisse étant enfilée sur le tube (8) extérieur axialement de façon à ce qu'elle se mette en plis de sorte qu'il est reçu sur le tube (8) extérieur une enveloppe (10) extérieure dont la longueur représente un multiple de la longueur du tube (8) extérieur.

5. Dispositif suivant la revendication 4,
**caractérisé en ce que**
le tube (8) extérieur aussi est fixé à l'une de ses extrémités au dispositif (1) d'extrusion, tandis que l'extrémité opposée reste ouverte.

6. Dispositif suivant la revendication 5,
**caractérisé en ce que**
le tube (8) extérieur est fixé d'une manière facilement amovible au dispositif (1) d'extrusion, afin de faciliter l'enfilage de l'enveloppe (6) intérieure sur le tube (5) intérieur.

7. Dispositif suivant la revendication 4,
**caractérisé en ce que**
le tube (8) extérieur a, sur son côté supérieur, une partie (13) transparente dirigée suivant la longueur, notamment un évidement dirigé suivant la longueur qui s'étend de telle façon sur toute la longueur du tube ou sur une partie de celui-ci que l'opérateur peut observer le déroulement du retrait de l'enveloppe (6) intérieure pendant l'opération d'extrusion de la chair à saucisse hachée ou pendant l'embossage de la saucisse (10).

8. Dispositif suivant la revendication 4,
**caractérisé en ce que**
le tube (8) extérieur est en un matériau transparent, notamment en verre, de sorte que l'opérateur peut observer l'opération de retrait de l'enveloppe (6) intérieure pendant l'extrusion de la chair à saucisse hachée pendant l'embossage de la saucisse.

9. Dispositif suivant la revendication 4,
**caractérisé en ce que**
le tube (8) extérieur et le tube (5) intérieur ont une longueur qui est comprise entre 10 et 50 cm et de préférence entre 20 et 30 cm.

10. Dispositif suivant la revendication 4,
**caractérisé en ce que**
le diamètre (d) extérieur du tube (5) intérieur est compris entre 1 et 4 cm, tandis que le diamètre (D) extérieur du tube (8) extérieur est compris entre 2 et 8 cm, un intervalle annulaire de plus de 0,5 cm de largeur restant libre entre les deux tubes (5 et 8).
